# EUROPÄISCHE PATENTSCHRIFT

(11) **EP 1 508 439 B1**
(45) Veröffentlichungstag und Bekanntmachung des Hinweises auf die Patenterteilung: **12.03.2008**
(21) Anmeldenummer: 03018533.4
(22) Anmeldetag: 16.08.2003
(51) Int. Cl.: B32B 27/32, G09F 3/10, C09J 123/14, C08L 23/14, B29C 47/06

(54) **Mehrschichtfolie zur Herstellung von Etiketten**
Multilayer film for the manufacture of labels
Film multicouche pour la fabrication d'étiquettes

(43) Veröffentlichungstag der Anmeldung: 23.02.2005
(73) Patentinhaber: Renolit AG, 67547 Worms (DE)
(72) Erfinder: Schubert, Edgar, 67346 Speyer (DE); Schumacher, Rainer, 38300 Wolfenbüttel (DE)
(74) Vertreter: Wagner, Jutta

(56) Entgegenhaltungen:
- EP-A- 0 060 037
- EP-A- 0 252 718
- EP-A- 0 586 160
- EP-A- 0 950 511
- DE-A- 10 147 538

## Beschreibung

Die vorliegende Erfindung betrifft eine Mehrschichtfolie zur Herstellung von Etiketten aus zwei äußeren Schichten aus Polyethylen und einer Kernschicht aus Polypropylen, welche durch haftvermittelnde Schichten zusammengehalten werden.

Etikettenfolien aus Kunststoff sind im Stand der Technik seit langem bekannt. Ursprünglich wurden Folien aus mono- oder biaxial orientierten Polyestern oder in Maschinenrichtung orientierten Polypropylenen verwendet. Die Etikettenfolie wird bedruckt, mit einer Klebschicht versehen und eine Ablösefolie oder Releaseliner, bestehend aus einer antihaftbeschichteten Folie oder einem antihaftbeschichteteten Papier, aufgebracht. Der Verbund aus Ablösefolie, Klebstoffschicht und Etikettenfolie wird so gestanzt, daß Folie und Klebstoffschicht getrennt, die Ablösefolie jedoch als fortlaufendes Band erhalten bleibt. Der Verschnitt wird als Stanzgitter entnommen, so daß auf der Ablösefolie eine Folge separater Etikettenabschnitte zurückbleibt.

Bei der Applikation der Etiketten auf das zu etikettierende Substrat wird die Ablösefolie mit einem kleinen Biegeradius in einem großen Winkel umgelenkt, wobei sich der relativ steife Etikettenabschnitt von der Ablösefolie löst und auf das Substrat aufgedrückt werden kann. Die Steifigkeit des Etikettenabschnitts muß dabei so groß sein, daß der teilweise von der Ablösefolie losgelöste Teil des Etikettenabschnitts "frei schwebend" bis zum Anlegepunkt an das zu etikettierende Substrat geschoben werden kann, ohne sich aus der vorgesehenen Bahn herauszubiegen.

Nachteilig bei den bekannten Folien ist es, daß die für automatische Etikettieranlagen notwendige ausreichende Steifigkeit der Etikettenabschnitte nur von einigen, insbesondere durch eine kostenintensive Orientierung in Maschinenrichtung zusätzlich versteifte Kunststoffmaterialien erreicht wird. Zu diesen gehören beispielsweise Polypropylen oder Polyethylenterephthalat. Weiterhin sind solche Kunststoffe schlecht bedruckbar, so daß zusätzlich noch ein kostspieliger Druckprimer aufgebracht werden muß.

Direkt oder nach einer Coronabehandlung bedruckbare Kunststoffe wie Polyethylen sind dagegen zu weich, so daß bei der Herstellung von Etikettenfolien erhebliche Nachteile in Kauf genommen werden müssen.

Es wurde daher mehrfach versucht, Etikettenfolien dadurch herzustellen, daß man eine relativ dicke und steife Kernschicht aus Polypropylen oder einer Polypropylen/Polyethylen-Mischung mit einer dünnen Polyethylenschicht kaschiert oder coextrudiert, welche bedruckbar ist. Um das Verbiegen bzw. Rollneigung (curling) der Folie bei der Verarbeitung zu unterbinden, damit diese bei der Verarbeitung Plan liegt, wird vorzugsweise auch auf der Rückseite eine weitere Polyethylenfolie aufkaschiert oder coextrudiert. Da Polyethylen und Polypropylenfolien nur schlecht aneinander haften, ist es weiterhin bekannt, zwischen die vorstehenden Schichten jeweils noch eine Haft- oder Siegelschicht einzubringen, welche aus EVA, EMA oder einer Polypropylen/Polyethylen niederer Dichte-Mischung besteht (vgl. EP 0 950 511 A2, DE 198 59 789 C1 und WO 00/08622). Um eine Recyclisierung der Etikettenabfälle zu ermöglichen, ist bevorzugt, daß die Haftvermittlerschichten ebenso wie die eigentlichen Folien aus Polyolefin bestehen (vgl. DE 198 59 789). Leider zeigen solche Verbundschichten aus reinen Polyolefinen bei der Herstellung durch Coextrusion eine ungenügende Lagenverbundhaftung, so daß es beim Verarbeiten, insbesondere beim Bedrucken der Etiketten und beim Wiederentfernen von der Unterlage zu partiellen Ablösungen kommt. Die ungenügende Lagenverbundhaftung kann getestet werden, indem man ein Klebeband aufdrückt und wieder abzieht, wodurch die Lagen voneinander teilweise oder komplette getrennt werden können. Dieses Verhalten ist unabhängig davon, in welchem Mischungsverhältnis Polypropylen und Polyethylen als Haftschicht miteinander gemischt werden.

Es stellte sich daher die Aufgabe, neue Haftvermittler zu finden, bei denen eine ausreichende Verbundhaftung erreicht wird, und die aus Polyolefin bestehen, um ein Recycling zusammen mit den übrigen Folienmaterialien zu ermöglichen.

Gemäß der Hauptanmeldung DE 101 47 538.1-16 kann man eine haftvermittelnde Mischung aus Polypropylen und Polyethylen niederer Dichte (LDPE) herstellen, wenn man ein Polyethylen sehr niederer Dichte (ULDPE) beimischt. Die haftvermittelnde Schicht enthält dabei 20-50 Gew-% Polypropylen, 60-25 % LDPE und 15-30 % ULDPE. Anstelle von LDPE kann auch ein lineares Polyethylen niederer Dichte (LLDPE) verwendet werden.

Es wurde nunmehr gefunden, daß sich eine solche haftvermittelnde. Schicht auch aus einer Mischung aus Polypropylen, welches als Random-Copolymer ein lineares Alkylen-1 mit 4-20 C-Atomen enthält, mit einem Polyethylen sehr niederer Dichte (ULDPE) herstellen läßt. Die Mischung kann aber muß kein LLDPE oder LDPE mehr enthalten und erlaubt den Anteil an Propylen erheblich gegenüber der Hauptanmeldung zu erhöhen. Die haftvermittelnde Schicht enthält somit 20-95 Gew.-% Polypropylencopolymer, 5-30 Gew.-% ULDPE und 0-50 Gew.-% LDPE oder LLDPE.

Das Polypropylencopolymerisat des Haftvermittlers wird aus 5-25 % Alkylen-1-und 95-75 % Propylen-monomeren, in üblicher Weise mit geeigneten Katalysatoren, als Random-Copolymerisat hergestellt, wobei Buten bis Octen als Comonomere bevorzugt sind.

Als Kernschicht der Mehrschichtfolie w ird e in h andelsübliches P olypropylen verwendet. Es hat üblicherweise eine Dichte von 0,90-0,92 g/cm³, einen Schmelzindex MFI 230 °C/2,16 kg von 3-20, insbesondere 5-10 g/10 min und einen Schmelzbereich von 150-180 °C. Für die ausreichende Steifigkeit der Kernschicht sollte das Polyproylen darüber hinaus einen E-Modul von über 1600 MPa, insbesondere von über 1800 MPa und besonders bevorzugt von (gemessen nach ISO 178) 2000-2100 MPa, aufweisen.

Als äußere Deckschicht wird ein handelsübliches Polyethylen niederer Dichte (LDPE oder LLDPE) verwendet, wobei Produkte mit einer Dichte von 0,90 bis 0,940 g/cm³, und insbesondere 0,925-0,940, für die Ausbildung als Folie besonders geeignet sind. Diese Polyethylene weisen einen Schmelzindex MFI 190 °C/2,16 kg von 0,1-22 g/10 min auf, ein Schmelzindex von 1-8 g/10 min ist bevorzugt. Der Schmelzbereich beträgt 100-135 °C.

Soweit die haftvermittelnde Schicht LDPE enthält, kann das gleiche Produkt wie in der äußeren Schicht verwendet werden.

Das Polyethylen sehr niederer Dichte (ULDPE) der haftvermittelnden Schicht weist eine Dichte von unter 0,90 g/cm³, insbesondere gleich oder geringer als 0,875 g/cm³, auf. Schmelzindex und Schmelzbereichliegen im gleichen Bereich wie er oben für LDPE angegeben ist.

Die Kernschicht besteht aus einer wie vorstehend beschriebenen Polypropylenmasse der bis 20 %, vorzugsweise 5-10 %, Polyethylen niederer Dichte (LDPE) beigemischt sein können, um die Bruchfestigkeit und Elastizität zu verbessern. Größere Mengen beeinflussen die Steifigkeit der Folie negativ. Als Polypropylen wird vorzugsweise ein Polypropylen relativ hoher Kristallinität verwendet, welches eine gute Steifigkeit in allen Richtungen aufweist und daher nicht durch Recken orientiert werden muß. Die Polypropylen-Kernschicht ist üblicherweise 20-80 µm, insbesondere 40-60 µm dick. Um die Stanzbarkeit dieser Folien zu verbessern, können der Masse in Mengen von bis zu 5, vorzugsweise bis zu 1 Gew.-%, für diesen Zweck bekannte N ucleierungsmittel, Harze u nd a ndere H ilfsstoffe b eigemengt werden.

Als ä ußere D eckschichten w ird e in h andelsübliches P olyethylen n iederer D ichte (LDPE) der vorstehenden Spezifikation verwendet. Die Schichtdicke dieser Deckschichten beträgt zwischen 3 und 5, vorzugsweise 6-8 µm.

Die Haftschichten weisen eine Schichtdicke von 2-10, vorzugsweise etwa 6-8 µm Dicke auf.

Der Gesamtverbund hat eine Dicke von vorzugsweise 40-100 µm, insbesondere werden Schichtdicken von 60-80 µm bevorzugt. Der Gesamtverbund hat ein E-Modul (Tensile Modulus, gemessen nach DIN EN ISO 527-3/2/10) von über 1000 MPa, vorzugsweise 1100-1400 MPa.

Zur Herstellung von Etikettenfolien wird eine Seite des Verbunds noch mit einem üblichen Adhäsionskleber und einer Ablösefolie versehen und die andere Deckschicht ggf. durch eine Coronabehandlung für die bessere Haftung der Druckfarbe behandelt.

Die E xtrusion d er fünf S chichten erfolgt ü ber e ine g eeignete 5 -Kanalkasette bei Temperaturen von etwa 200-260°C, vorzugsweise etwa 240 °C. Der über eine entsprechende Breitschlitzdüse austretende Verbund wird in freiem Fall über eine Kühlwalze abgezogen, welche eine Oberflächentemperatur von 30-95 °, vorzugsweise 50-60°C aufweist, wodurch sich optisch klare fest verbundene steife Folien ergeben.

Soweit dies gewünscht wird, können die vorstehenden Schichten noch mit Pigmenten gefärbt oder durch Füllstoffe wie Titandioxid oder Kreide aufgerauht und undurchsichtig gemacht und zusätzlich versteift werden. Auf die diesbezüglichen Maßnahmen des Standes der Technik wird hiermit verwiesen.

### Beispiele

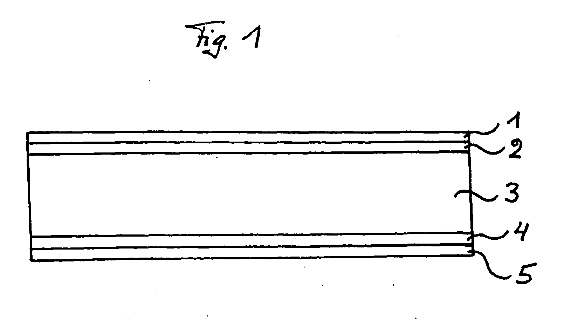

In einer 5-Schicht-Coextrusionsanlage der Marke Reifenhäuser werden Kunststoffmischungen der in der folgenden Tabelle angegebenen Zusammensetzung coextrudiert, wobei das Schichtmaterial C die Schicht 1 und 5, das Material B die Schicht 2 und 4 und das Material A die Schicht 3 bildet, wie es in der Fig. 1 dargestellt ist. Schichten 1 und 5 haben eine durchschnittliche Dicke von 7 µm, Schichten 2 und 4 haben eine durchschnittliche Dicke von 7 µm und Schicht 3 hat eine durchschnittliche Dicke von 47 µm. Die aus dem Extruder mit einer Temperatur von etwa 200-260 °C austretende Verbundschicht wird auf einer Kühlwalze bei einer Temperatur von 50-60° gekühlt und zu Lagerung aufgerollt.

Die Steifigkeit der Folien wird anhand des E-Moduls nach der Methode DIN EN ISO 527-3/2/10 bestimmt.

### Lagenverbundhaftung bei coextrudierten oder mehrlagigen Folien:

**Prüfmittel:** Stanzeisen 100 x 100 mm
Klebeband Typ 54108, 15 mm breit, von INTERTAPE

### Probenvorbereitung

Man legt mehrere Lagen, ca. 25 Stück Folie übereinander und stanzt mit dem Stanzeisen auf einer Stanzunterlage aus.
Die Stanzkanten sollen glatt und sauber gestanzt sein.

Die obere und untere Folie werden verworfen.
Folien vereinzeln, 2 Folienstücke entnehmen.

Zwei einzelne Folienstücke werden auf die Arbeitsplatte des Prüfraumes (= harte, glatte Unterlage) gelegt.

Insgesamt 8 Klebestreifen (Typ 54108) von 70 mm Länge werden zur Hälfte auf die Folienkanten folgendermaßen aufgeklebt:
- Klebestreifen auf die Corona behandelte Seite (wenn behandelt) kleben
- je 4 Streifen im Winkel von 30° entlang der Kanten 1. Folienstück
- je 4 Streifen im Winkel von 45° entlang der Kanten 2. Folienstück

Die Klebestreifen werden mit dem Fingernagel mit starkem Druck auf die Folie aufgerieben.
Nach 20 Sekunden Wartezeit werden die Klebebänder **ruckartig im Winkel von 135°** abgezogen.

Bleibt die Folie nach Abzug aller 6 Klebestreifen überall an den Kanten unbeschädigt, wurde der Test bestanden = pos.

Sobald bei einem Klebestreifenabzug Teile einer Folienlage aus der Folie herausgerissen oder ganze Schichten abgezogen werden, ist der Test nicht bestanden = neg.

Die optischen Eigenschaften der Folien werden zum einen durch einen reinen Vergleich zueinander beurteilt. Besonders wichtig ist hierbei, dass eine möglichst geringe Verzerrung der durch die Folie betrachteten Hintergrund auftritt. Ein weiteres Kriterium ist, dass die Folien eine so gering wie mögliche Trübung aufweisen. Der Trübungsgrad wird anhand der Methode ASTM D1003-92 ermittelt.

In der folgenden Tabelle sind nicht verzerrende ungetrübte Folien in der Zeile "Optik" mit "pos." und verzerrte oder getrübte Folien mit "neg." bezeichnet.

**Tabelle**

| **Schicht A** | **Masse-%** | | |
|---|---|---|---|
| PP (d=0,9 - 0,91) | 98 | 98 | 88 |
| LDPE (d = 0,931) | | | 10 |
| LLDPE (d=0,917) | 2 | 2 | |
| ULDPE (d=0,87-0,875) | | | 2 |
| | | | |

| **Schicht B** | | | |
|---|---|---|---|
| PPB (d=0,9-0,91)* | 95 | 90 | 75 |
| LDPE (d=0,931 ) | | | 15 |
| ULDPE (d=0,87-0,875) | 5 | 10 | |
| | | | |

| **Schicht C** | | | |
|---|---|---|---|
| LDPE (d=0,931 ) | 100 | 100 | 100 |

| **Ergebnis** | | | |
|---|---|---|---|
| Lagenverbundhaftung | pos | pos | pos |
| Steifigkeit | pos | pos | pos |
| Optik | pos | pos | pos |
| | | | |
| PPB ist ein Propen/Buten-Random-Copolymer mit 20 Gew.-% -Buten. | | | |

## Patentansprüche

1. Mehrschichtfolie zur Herstellung von Etikettenmaterial, enthaltend zwei äußere Deckschichten (1, 5) aus Polyethylen niederer Dichte, eine Kernschicht (3) aus hochkristallinem Polypropylen oder aus einer Mischung mit bis zu 20 % Polyethylen niederer Dichte und haftvermittelnde Schichten (2, 4) aus Polypropylen, **dadurch gekennzeichnet, daß** die haftvermittelnden Schichten 5-30 Gew.-% ULDPE (d ≤ 0,875), 0-50 Gew.-% LDPE und/oder LLDPE und 20-95 Gew.-% Polypropylen Random-Copolymerisat mit einem Alkylen-1 mit 4-20 C-Atomen enthalten.

2. Folie gemäß Anspruch 1, **dadurch gekennzeichnet, daß** die äußeren Schichten (1, 5) 10-30 % der Foliendicke, die Haftschicht (2, 4) 10-30 % der Foliendicke und die Kernschicht (3) 60-90 % der Foliendicke von insgesamt ca. 40-100 µm ausmacht.

3. Folie gemäß Anspruch 1 oder 2, **dadurch gekennzeichnet, daß** die Kernschicht (3) zu über 80 % aus Polypropylen mit einer Dichte von 0,90-0,92 g/cm³, einem Schmelzindex von 5-10 g/10 min (MFI 230 °C/2,16 kg) und einem Schmelzbereich von 150-180 °C, ein E-Modul (ISO 178 von über 1600 MPa, insbesondere über 2000 MPa, besteht, welches mit Polyethylen niederer Dichte (LDPE) mit einer Dichte von 0,90-0,940 g/cm³, einem Schmelzindex von 0,1-22 g/10 min (MFI 190 °C/2,16 kg) und einem Schmelzbereich von 100-135 °C in einer Menge von 2-20 % vermischt ist.

4. Folie gemäß einem der Ansprüche 1 bis 3, **dadurch gekennzeichnet, daß** die äußeren Deckschichten aus einem Polyethylen niederer (LDPE) oder sehr niederer Dichte mit einer Dichte von 0,90 bis 0,940 g/cm³, und insbesondere 0,925-0,940 und einem Schmelzindex MFI 190 °C/2,16 kg von 0,1-22 g/10 min, insbesondere 1-8 g/10 min und einem Schmelzbereich von 100-135 °C bestehen.

5. Verfahren zur Herstellung von Folien gemäß einem der Ansprüche 1-4, **dadurch gekennzeichnet, daß** die Kunststoffe über einer 5-Schicht-Coextrusionsanlage bei Temperaturen von 200-250 °C geformt und über eine Kühlwalze mit einer Oberflächentemperatur von 40-70 °C, vorzugsweise 50-60 °C, verfestigt werden.

6. Verwendung von Folien gemäß einem der Ansprüche 1-4 zur Herstellung von Etiketten, welche über einen Adhäsionskleber auf einer Ablösefolie bzw. Releaseliner aus antifhaftbeschichteter Folie oder Papier befestigt sind.

## Claims

1. Multilayer film for manufacturing label material, comprising two outer layers (1, 5) of low-density polyethylene; a core layer (3) of highly crystalline polypropylene or of a blend thereof with up to 20% of low-density polyethylene; and adhesion-promoting layers (2, 4) of polypropylene, **characterized in that** the adhesion-promoting layers comprise 5-30% by weight of ULDPE (d ≤ 0.875), 0-50% by weight of LDPE and/or LLDPE, and 20-95% by weight of a random copolymer of polypropylene with a 1-alkylene having 4-20 carbon atoms.

2. Film according to claim 1, **characterized in that** the outer layers (1, 5) constitute 10-30% of the film thickness, the adhesion-promoting layers (2, 4) constitute 10-30% of the film thickness, and the core layer (3) constitute 60-90% of the film thickness, the total film thickness being approximately 40-100 µm.

3. Film according to claim 1 or 2, **characterized in that** more than 80% by weight of the core layer (3) is polypropylene having a density of 0.90-0.92 g/cm³, a melt index of 5-10 g/10 min (MFI 230°C/2.16 kg), a melting range of 150-180°C, and an elasticity modulus (ISO 178) of more than 1,600 MPa, preferably more than 2000 MPa,
which is blended with low-density polyethylene (LDPE) comprising a density of 0.90-0.940 g/cm³, a melt index of 0.1-22 g/10 min (MFI 190°C/2.16 kg), and a melting range of 100-135°C, in an amount of 2-20% by weight.

4. Film according to anyone of claims 1 to 3, **characterized in that** the outer layers consist of a low-density polyethylene (LDPE) or ultralow-density polyethylene having a density of from 0.90-0.940 g/cm³ a melt index MFI 190°C/2.16 kg of 0.1-22 g/10 min, preferably 1-8 g/ 10 min, and a melting range of 100-135°C.

5. Method for producing a film according to anyone of claims 1 to 4 **characterized in that** the polymers are shaped using a 5-layer coextrusion unit at temperatures of 200-250°C; and solidified using a chill roll having a surface temperature of 40-70°C, preferably 50-60 °C.

6. Use of a film according to anyone of claims 1 to 4 for manufacturing labels, which are affixed by an adhesive to a separating film or release liner made of non-stick coated film or paper.

## Revendications

1. Film multicouche pour la fabrication de matériau d'étiquette, contenant deux couches de revêtement (1, 5) extérieures à base de polyéthylène de faible densité, une couche centrale (3) à base de polypropylène hautement cristallin ou d'un mélange ayant jusqu'à 20 % de polyéthylène de faible densité et des couches (2, 4) adhésives à base de polypropylène, **caractérisé en ce que** les couches adhésives contiennent 5 à 30 % en poids de ULDPE (d ≤ 0,875), de 0 à 50 % en poids de LDPE et/ou de LLDPE et 20 à 95 % en poids de copolymérisat aléatoire de polypropylène avec un alkylène-1 avec 4 à 20 atomes de carbone.

2. Film selon la revendication 1, **caractérisé en ce que** les couches (1, 5) extérieures représentent 10 à 30 % de l'épaisseur de film, la couche adhésive (2, 4) 10 à 30 % de l'épaisseur de film et la couche centrale (3) 60 à 90 % de l'épaisseur de film qui fait au total environ 40 à 100 µm.

3. Film selon la revendication 1 ou 2, **caractérisé en ce que** la couche centrale (3) est composée de plus de 80 % de polypropylène avec une densité de 0,90 à 0,92 g/cm³, un indice de fusion de 5 à 10 g/10 min (MFI 230°C/2,16 kg) et une plage de fusion de 150 à 180°C, un module d'élasticité (ISO 178 supérieur 1600 MPa, en particulier supérieur à 2000 MPa), qui est mélangé avec du polyéthylène de faible densité (LDPE) avec une densité de 0,90 à 0,940 g/cm³, un indice de fusion de 0,1 à 22 g/10 min (MFI 190°C/2,16 kg) et une plage de fusion de 100 à 135°C dans une quantité de 2 à 20%.

4. Film selon l'une quelconque des revendications 1 à 3, **caractérisé en ce que** les couches de revêtement extérieures sont constituées d'un polyéthylène de faible densité (LDPE) ou de densité très faible avec une densité de 0,90 à 0,940 g/cm³, et en particulier de 0,925 à 0,940 et une plage de fusion MFI de 190°C/2,16 kg de 0,1 à 22 g/10 min, en particulier de 1 à 8 g/10 min et une plage de fusion de 100 à 135°C.

5. Procédé pour la fabrication de films selon l'une quelconque des revendications 1 à 4, **caractérisé en ce que** les plastiques sont formés au moyen d'une installation de coextrusion à 5 couches à des températures de 200 à 250°C et sont consolidées par un cylindre de refroidissement avec une température superficielle de 40 à 70°C, de préférence 50 à 60°C.

6. Utilisation de films selon l'une quelconque des revendications 1 à 4 pour la fabrication d'étiquettes, qui sont fixées par une colle d'adhésion sur un film à décoller resp un releaseliner à base de film anti-adhésif ou de papier.
